Europäisches Patentamt

European Patent Office

Office européen des brevets

(11) Publication number: **0 196 532**
**A1**

# EUROPEAN PATENT APPLICATION

(21) Application number: 86103566.5

(22) Date of filing: 17.03.86

(51) Int. Cl.⁴: **G06F 5/06**

(30) Priority: 29.03.85 DE 3511626

(43) Date of publication of application:
08.10.86 Bulletin 86/41

(84) Designated Contracting States:
AT CH DE FR GB IT LI NL SE

(71) Applicant: **Siemens Aktiengesellschaft Berlin und München**
**Wittelsbacherplatz 2**
**D-8000 München 2(DE)**

(72) Inventor: **Geiger, Gerhard, Dipl.-Ing.**
**Hohenwaldeckstrasse 7**
**D-8162 Schliersee(DE)**
Inventor: **Strafner, Michael, Dipl.-Ing.**
**Hartriegelweg 30**
**D-8011 Kirchheim(DD)**

(54) Method for operating a memory used as a clock interface and arrangement for the realization of the method.

(57) Zum Synchronisieren von unterschiedlichen Geschwindigkeiten bei der Übertragung von Datenpaketen werden drei funktionsmäßig trennbare Teilspeicher (8, 9,10) alternierend mit einem ersten Arbeitstakt (CLK1) beschrieben und mindestens einer der Teilspeicher mit einem zweiten, - schnelleren Arbeitstakt (CLK2) ausgelesen. Jeweils beim Überlauf eines Speicherbereichs oder beim Auftreten des Paketendes wird auf einen freien Bereich umgeschaltet und der Inhalt des beschriebenen Bereichs ausgelesen bzw. in einen zum Auslesen vorgesehenen Teil übertragen. Das Verfahren hat den Vorteil, daß Datenpakete variabler Länge ohne Gefahr einer Speicherblockierung übertragen werden können.

FIG 2

EP 0 196 532 A1

Verfahren zum Betreiben einer als Taktschnittstelle dienenden Speicheranordnung und Anordnung zur Durchführung des Verfahrens

Die Erfindung betrifft ein Verfahren zum Betreiben einer als Taktschnittstelle bei der Übertragung von Datenpaketen dienenden Speicheranordnung, wobei die Daten zum Einschreiben bzw. Auslesen in zwei unabhängigen Teilspeichern gepuffert werden und eine Anordnung zur Durchführung des Verfahrens.

In Datenverarbeitungssystemen mit verteilter Intelligenz oder in Systemen mit Peripherie-Einheiten und einer Zentraleinheit muß in die Datenübertragungswege eine Taktschnittstelle geschaltet werden, wenn die einzelnen Einheiten mit unterschiedlichen Arbeitstakten betrieben werden.

Ein bekanntes Synchronisierverfahren beruht auf der Verwendung eines Single Port RAMs, das als sogenannter Tandem-Fifo-Speicher betrieben wird (Fifo = first in -first out). Dabei ist der Speicher in zwei Bereiche geteilt, die alternierend von beiden Seiten mit einem ersten Takt beschrieben und mit einem schnelleren zweiten Takt gelesen werden. Für die Zeit, in der das Auslesen des einen Bereichs erfolgt, muß natürlich sichergestellt sein, daß alle eingangsseitig anliegenden Daten in den anderen Speicherbereich eingelesen werden und nicht verloren gehen.

Dazu ist es bei Übertragungsverfahren mit fest vorgegebenen Paketlängen ausreichend, wenn die beiden Speicherbereiche jeweils die fest vorgegebene Datenmenge aufnehmen können. Bei Übertragungsverfahren mit variablen Paketlängen kann jedoch das Problem auftreten, daß die Kapazität des aufnehmenden Speicherbereichs nicht zur Aufnahme des gesamten Pakets ausreicht. In einem solchen Fall wird nach dem Beschreiben des ersten Bereichs auf den zweiten Bereich umgeschaltet, der den Rest des Datenpaketes aufnimmt, während der erste Bereich bereits ausgelesen wird.

Das hat jedoch den Nachteil, daß die gesamte Taktschnittstelle für weiteres Einschreiben so lange blockiert ist, bis der erste Bereich wieder freigegeben wird. Diese Blockierung wirkt sich dann nachteilig aus, wenn das Schreiben des zweiten Bereichs vor dem vollständigen Auslesen des ersten Bereichs beendet ist. Im ungünstigsten Fall ist der zweite Bereich lediglich mit einem einzigen Datenwort besetzt, so daß die Datenübertragung für die gesamte Auslesezeit unterbrochen ist.

Der Erfindung lag daher die Aufgabe zugrunde, ein Verfahren der oben genannten Art und eine Anordnung zur Durchführung des Verfahrens anzugeben, mit welchem die Übertragung von Datenpaketen variabler Blocklänge ohne Gefahr einer Blockierung ermöglicht wird.

Diese Aufgabe wird gemäß den kennzeichnenden Teilen der unabhängigen Ansprüche gelöst.

Der Erfindung liegt das Prinzip zugrunde, den gesamten Pufferspeicher der Taktschnittstelle durch mehrfache Unterteilung so zu organisieren, daß sowohl jeweils ein Puffer zum Einschreiben bzw. Auslesen als auch ein unabhängiger weiterer Puffer vorgesehen ist, der überlaufende Abschnitte eines Datenpakets so lange aufnehmen kann, bis mindestens einer der anderen Bereiche wieder zur Datenaufnahme bereit ist. Dieses abschnittsweise Zwischenspeichern und Umladen bzw. Auslesen ermöglicht es, auch längere Datenpakete ohne Unterbrechung in einem Speicher zu puffern, dessen Kapazität unabhängig von der Datenpaketlänge ausgelegt sein kann. Die Datenpakete werden in Datenblöcken konstanter Länge, die von der Kapazität des auslesenden Speichers bestimmt ist, und dem verbleibenden Rest weitergegeben, das heißt, die Paketstruktur bleibt erhalten. Die Erfindung ist ohne weiteres auf Datenverarbeitungssysteme anwendbar, die auf einen direkten Arbeitsspeicherzugriff, auf einer Konfiguration mit Ein/Ausgabebausteinen oder einer Single-Chip Zentraleinheit beruhen.

Weiterbildungen der Erfindung ergeben sich aus den Unteransprüchen.

Im folgenden wird die Erfindung anhand eines Ausführungsbeispiels weiter beschrieben.

Figur 1 zeigt schematisch ein Datenverarbeitungssystem mit verteilter Intelligenz und mehreren Arbeitstakten.

Figur 2 zeigt schematisch eine erfindungsgemäße Taktschnittstelle.

Figur 3 zeigt schematisch den eingangs-und ausgangsseitigen Datenfluß der Anordnung gemäß Figur 2.

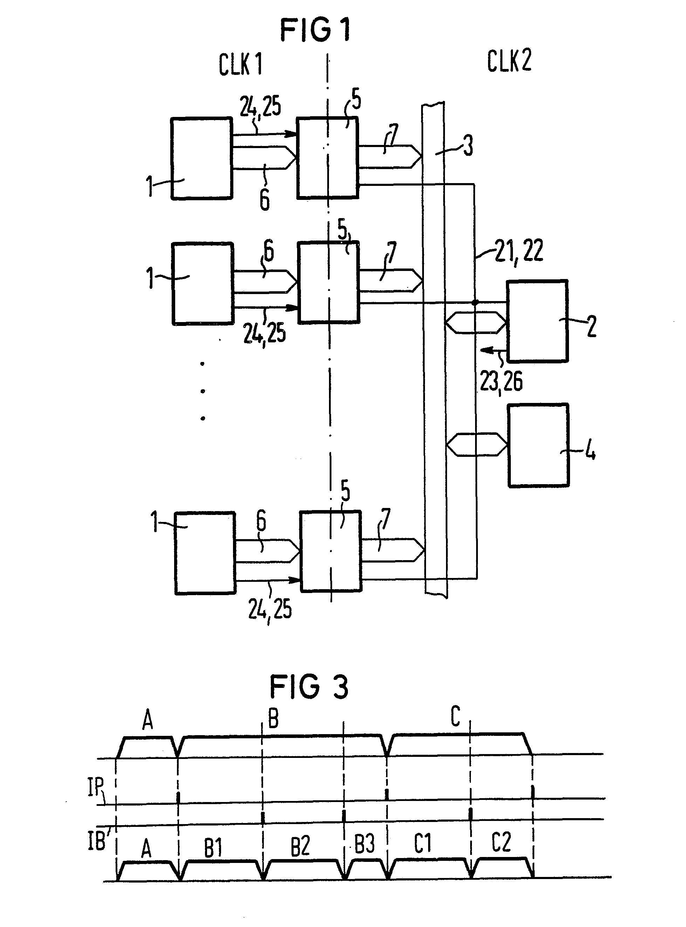

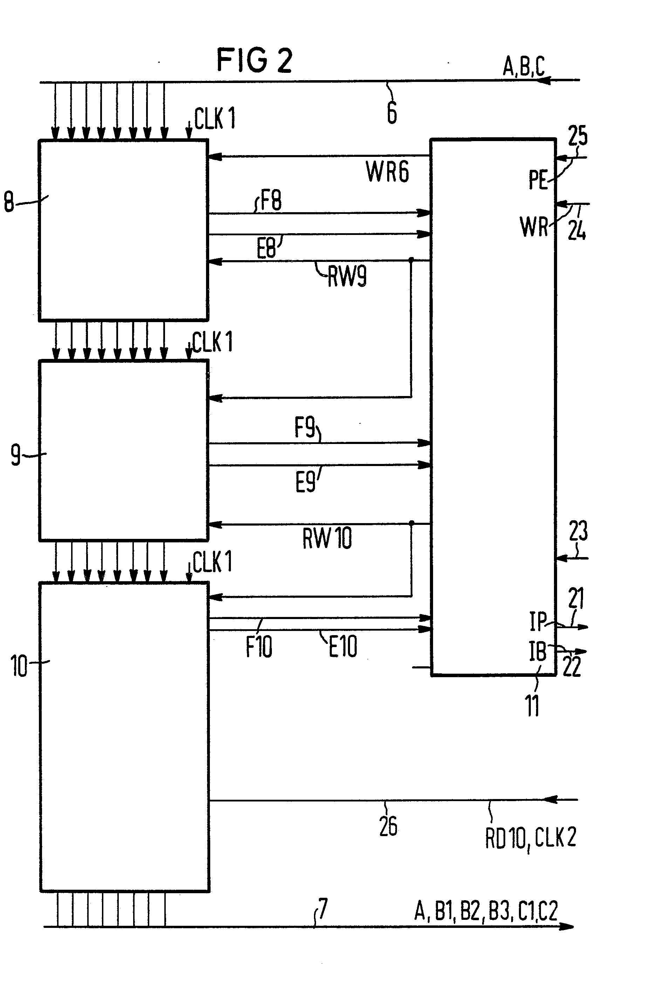

Das Datenverarbeitungssystem für binär kodierte Daten in Figur 1 besteht aus mehreren parallel arbeitenden Peripherie-Einheiten 1 und einer Zentraleinheit 2 zur Kontrolle und Koordination der Datenübertragung über einen gemeinsamen parallelen Datenbus 3 und des Zugriffs auf einen gemeinsamen Arbeitsspeicher 4. Die Peripherie-Einheiten 1 sind mit einem Arbeitstakt CLK1 beaufschlagt, während die gemeinsamen Anordnungen wie Zentraleinheit 2 und Speicher 4 mit einem schnelleren Takt CLK2 arbeiten. Zur Synchronisierung der beiden Arbeitstakte sind den Peripherie-Einheiten 1 jeweils Taktschnittstellen 5 nachgeschaltet, die im einzelnen in Figur 2 wiedergegeben sind. Auf deren eingangsseitigen parallelen Datenbussen 6 erfolgt die Datenübertragung mit dem ersten Arbeitstakt CLK1, während die Daten ausgangsseitig parallel über Datenbusse 7 auf den gemeinsamen Bus 3 mit dem zweiten Arbeitstakt CLK2 ausgelesen werden.

Wie Figur 2 zeigt, besteht jede Taktschnittstelle 5 aus einem Schreib/Lesespeicher mit drei Teilspeichern 8, 9, 10 und einer Steuereinheit 11. Die drei Teilspeicher sind funktionsmäßig unabhängig voneinander betreibbar. In dem hier wiedergegebenen vorteilhaften Ausführungsbeispiel ist die gesamte Speicheranordnung als Fifo-Speicher ausgebildet, der aus den drei ebenfalls als Fifo-Speicher ausgebildeten Teilspeichern 8, 9, 10 zusammengeschaltet ist. Die Datenübernahme und Datenausgabe von den Bussen und von einem Teilspeicher zum anderen erfolgt datenwortweise parallel.

Da die Kapazität des ausgangsseitigen dritten Teilspeichers 10 eine maximale Blocklänge festlegt, in welcher ein durch die Taktschnittstelle laufendes Datenpaket im Falle einer Überlänge unterteilt wird, bestimmt sie auch die Zugriffshäufigkeit auf den gemeinsamen Datenbus 3. Vorteilhafterweise ist der dritte Teilspeicher 3 doppelt so groß wie jeweils die beiden übrigen Teilspeicher 8 und 9.

Jeder der drei Teilspeicher 8, 9, 10, zeigt der Steuereinheit 11 über Signale F8, F9, F10 bzw. E8, E9, E10, seinen Zustand "voll" bzw. "leer" an.

Die Steuereinheit 11 ist beispielsweise als PLA aufgebaut (PLA = programmable logical erray), welche mittels ankommenden Steuersignale den Ablauf der Speicherzugriffe steuert. Sie empfängt von der zugehörigen Peripherie-Einheit 1 über eine Steuerleitung 24 ein Steuersignal WR, welches anzeigt, wenn ein auf dem Datenbus 6 anstehendes Datenwort in den ersten Teilspeicher 8 einzuschreiben ist. Ferner wird über eine Steurleitung 25 mit einem Steuersignal PE das Paketende angezeigt. Die Steuereinheit 11

signalisiert der Zentraleinheit 2 über Steuerleitungen 21, 22, mit Steuersignalen JP, JB Unterbrechungswünsche, wenn entweder der dritte Teilspeicher 10 vollgeschrieben ist, oder wenn er das Paketende aufgenommen hat. Umgekehrt wird der Kontrolleinheit 11 von der Zentraleinheit 2 über eine Steuerleitung 23 das Auslesen des dritten Teilspeichers 10, das heißt, den Empfang eines Datenblockes oder des gesamten Datenpakets, quittiert.

Der erste Teilspeicher 8 empfängt von der Steuereinheit 11 ein Schreibsignal WR8 und ein Lesesignal RW9, welches gleichzeitig vom zweiten Teilspeicher 9 als Schreibsignal interpretiert wird. Entsprechend wird ein Lesesignal RW10 vom zweiten Teilspeicher 9 als Lese-und vom dritten Teilspeicher 10 als Schreibsignal interpretiert. Der Befehl RD10 zum Lesen des dritten Speicherbereichs 10 erfolgt von der Zentraleinheit 2 über die Steuerleitung 26. Dieses Signals stellt für den Teilspeicher 10 beim Zustand "Lesen" den zweiten Arbeitstakt CLK2 dar, indem der Befehl RD10 mit der Frequenz des Arbeitstaktes CLK2 wiederholt wird, bis der Teilspeicher ausgelesen ist.

Figur 3 zeigt in der oberen Zeile ein Beispiel für ein Impulsdiagramm eines Datenstromes, wie er auf dem Datenbus 6 abgreifbar ist. Er setzt sich aus drei Datenpaketen A, B, C zusammen, die jeweils eine beliebige Anzahl von Datenworten auffassen. Die einzelnen Datenpakete sind durch Steuerzeichen voneinander getrennt. In der unten liegenden Zeile ist über der Zeit ein Impulsdiagramm desselben Datenstromes aufgetragen, wie es auf dem Datenbus 7 nach dem Durchlaufen der Taktschnittstelle 5 abgreifbar ist. Es zeigt -unter der beispielhaften Annahme, daß die Kapazität des dritten Teilspeichers 10 nicht zur Aufnahme der Datenpakete B, C ausreicht -wie die Datenpakete B, C in Datenblöcken B1, B2 und dem Rest B3 bzw. in einem Datenblock C1 und dem Rest C2 übertragen werden. Schließlich sind die wirksamen Flanken der zugehörigen Unterbrechungssignale IP, IB wiedergegeben.

Im folgenden wird das Verfahren und die Funktion der Anordnung anhand der Figuren beschrieben. Von der Steuerung der Steuereinheit 11 werden die drei Teilspeicher mit dem ersten Arbeitstakt CLK1 alternierend beschrieben und vollständig beschriebene oder mit dem Paketende beaufschlagte Teilspeicher alternierend ausgelesen, wobei der dritte Teilspeicher 10 mit dem zweiten Arbeitstakt CLK2 beaufschlagt ist. Unter der Voraussetzung eines entsprechend langen Datenpaketes wird die gesamte Speicheranordnung von unten nach oben gefüllt, das heißt, der Teilspeicher 9 nach dem Teilspeicher 10 und als letztes der Teilspeicher 8. Sobald der ausgangsseitige Teilspeicher 10 vollständig beschrieben ist, oder wenn während des Beschreibens das Datenpaket beendet ist, wird er vom Teilspeicher 9 funktionsmäßig getrennt. Während der Teilspeicher 10 mit dem schnelleren Arbeitstakt CLK2 ausgelesen werden kann, kann der Teilspeicher 9 mit dem Arbeitstakt CLK1 beschrieben werden, bis er ebenfalls voll oder das Datenpaket beendet ist. Anschliessend werden Teilspeicher 8 und 9 funktionsmäßig getrennt. Treffen weitere Datenwörter ein, so wird auf entsprechende Weise Teilspeicher 8 beschrieben. Sobald die Daten aus dem Teilspeicher 10 ausgelesen sind und daher dieser Speicher wieder freigegeben ist, wird die Trennung zum Teilspeicher 9 aufgehoben und dessen Inhalt in den Teilspeicher 10 übertragen, während gleichzeitig der Teilspeicher 8 beschreibbar ist. Sobald die Datenübertragung vom Teilspeicher 9 zum Teilspeicher 10 abgeschlossen ist, erfolgt eine Übertragung des Teilspeichers 8 in den Teilspeicher 9 unter Trennung von Teilspeicher 10. Dieses Verfahren ist nicht auf die Verwendung eines Fifo-Speichers beschränkt.

Im einzelnen arbeitet die Anordnung der Figur 2 folgendermaßen. Der Steuereinheit 11 wird das Anliegen eines Datenwortes auf dem Datenbus 6 durch ein Signal auf Steuerleitung 24 angezeigt. Nachdem durch Abfragen des Steuersignals E8 überprüft ist, daß der Teilspeicher 8 leer ist, wird durch das Schreibsignal WR8 das Einschreiben des Datenwortes in den Teilspeicher 8 bewirkt.

Vor dem Einschreiben des nächsten Datenwortes überprüft die Kontrolleinheit 11 über das Steuersignal E9 den Zustand des Teilspeichers 9 und überträgt das Datenwort aus dem Teilspeicher 8, wenn der Teilspeicher 9 leer ist. Auf entsprechende Weise erfolgt eine Übertragung des Datenwortes aus dem Teilspeicher 9 in den Teilspeicher 10.

Für das in Figur 3 gezeigte Beispiel eines Datenpaketes A, dessen Anzahl von Datenworten nicht die Kapazität des dritten Teilspeichers 10 übersteigt, wird dieser Vorgang so lange wiederholt, bis über Steuersignal PE das Paketende angezeigt wird. Sobald das Datenpaket A vollständig im dritten Teilspeicher 10 enthalten ist, wird die Zentraleinheit 2 durch den Unterbrechungsbefehl JP zur Übertragung des Inhalts des Teilspeichers 10 in den Arbeitsspeicher 4 aufgefordert. Dieser Vorgang wird durch das Lesesignal RD10 unter dem zweiten Arbeitstakt CLK2 bewirkt. Die Übertragung des gesamten Datenpakets über Steuerleitung 23 quittiert.

Im Beispiel des Datenpakets C wird der Teilspeicher vollständig beschrieben, was der Kontrolleinheit 11 über das Steuersignal F10 signalisiert wird. Diese sendet daraufhin den Unterbrechungswunsch JB an die Zentraleinheit 2, der als Hinweis interpretiert wird, daß lediglich ein erster Block C1 des Datenpakets bereitsteht. Während des Auslesens des dritten Teilspeichers 10 wird auf die oben beschriebene Weise unter Zwischenspeicherung eines jeden Datenwortes im ersten Teilspeicher 8 der Rest C2 des Datenpakets C im Teilspeicher 9 zwischengepuffert. Sobald der dritte Teilspeicher 10 geleert ist, wird der Inhalt des Teilspeichers 9 übertragen. Gleichzeitig kann mit dem Einschreiben eines weiteren Datenpakets in den ersten Teilspeicher 8 begonnen werden.

Im Beispiel des Datenpaketes B wird nach dem Einschreiben des ersten Blockes B 1 in den Teilspeicher 10 der Teilspeicher 9 mit der ersten Hälfte unter der Teilspeicher 8 mit der zweiten Hälfte des Datenblockes B2 beschrieben. Während in den Teilspeicher 8 noch eingeschrieben wird, werden die Daten vom Teilspeicher 9 in den Teilspeicher 10 geschoben. Anschließend wird der Inhalt des Teilspeichers 8 in den Teilspeicher 9 übertragen, wobei gleichzeitig der Rest B3 des Datenpakets in den Teilspeicher 8 eingeschrieben wird.

## Claims

1. Verfahren zum Betreiben einer als Taktschnittstelle (5) bei der Übertragung eines Datenpakets (A, B, C) dienenden Speicheranordnung, wobei die Daten zum Einschreiben bzw. Auslesen in zwei unabhängigen Teilspeichern (8, 9, 10) gepuffert werden, **dadurch gekennzeichnet,** daß die beiden Teilspeicher (8, 9) und ein dritter Teilspeicher (10) mit einem ersten Arbeitstakt (CLK1) alternierend beschrieben und vollständig beschriebene oder mit dem Paketende beaufschlagte Teilspeicher (8, 9, 10) alternierend ausgelesen werden, wobei zumindeste einer der Teilspeicher mit einem zweiten Arbeitstakt (CLK2) beaufschlagt ist.

2. Verfahren nach Anspruch 1, **dadurch gekennzeichnet,** daß die jeweils vollständig beschriebenen oder mit dem Paketende beaufschlagten ersten und zweiten Teilspeiche - (8, 9) jeweils in den dritten, als Ausgangspuffer wirkenden Teilspeicher (10) umgeladen werden.

3. Verfahren nach Anspruch 2, **dadurch gekennzeichnet,** daß lediglich der dritte Teilspeicher (10) beim Auslesen mit dem zweiten Arbeitstakt (CLK2) betrieben wird und das Umladen mit dem ersten Arbeitstakt (CLK1) erfolgt.

4. Verfahren nach Anspruch 2, **gekennzeichnet** durch folgende Verfahrensschritte:

a) Einschreiben eines Datenwortes in den ersten Teilspeicher (8) mit dem Arbeitstakt (CLK1)

b) Übertragen des Datenwortes in den zweiten Teilspeicher (9) mit dem Arbeitstakt (CLK1)

c) Übertragen des Datenwortes aus dem zweiten in den dritten Teilspeicher (8, 9) mit dem Arbeitstakt (CLK1)

d) Wiederholung der Verfahrensschritte a) bis c) bis der dritte Teilspeicher (C) entweder vollständig beschrieben oder das Paketende erreicht wird.

e) Auslesen des dritten Teilspeichers (C) mit dem Arbeitstakt (CLK2)

Falls weitere Datenwörter eintreffen:

f) Wiederholung der Verfahrensschritte a) und e) bis der zweite Teilspeicher (9) vollständig beschrieben oder das Paketende erreicht ist.

g) Vollständige Übernahme des zweiten Teilspeichers (9) in den dritten Teilspeicher (10) und Durchführung von Schritt e).

Falls weitere Datenwörter eintreffen:

h) Einschreiben in den ersten Teilspeicher bis dieser vollständig beschrieben oder das Paketende erreicht ist.

i) Vollständige Übernahme des Speicherinhalts des ersten Teilspeichers (8) zumindest in den dritten Teilspeicher (9)

j) Durchführung des Verfahrensschrittes e)

5. Anordnung zur Durchführung des Verfahrens nach Anspruch 1, **gekennzeichnet durch** einen Schreib/Lesespeicher mit drei funktionsmäßig voneinander trennbaren Teilspeichern (8, 9, 10) und durch eine Steuereinheit (11) zum alternierenden Ansteuern der Lese- bzw. Schreibfunktion der einzelnen Teilspeicher (8, 9, 10), wobei das Umschalten von einem Teilspeicher zum anderen vom Zustand "Teilspeicher voll" oder "Paketende" bzw. "Teilspeicher leer" bestimmt ist und durch einen Arbeitstakt (CLK2), zumindest beim Auslesen eines Teilspeichers, der - schneller ist als ein Arbeitstakt (CLK1) beim Schreiben der Teilspeicher (8, 9, 10).

6. Anordnung nach Anspruch 5, **dadurch gekennzeichnet,** daß ein einziger Teilspeicher (10) als Ausgangspuffer, der beim Lesen mit dem Arbeitstakt (CLK2) beaufschlagt ist, unmittelbar mit einem ausgangsseitigen Datenbus (7) verbunden ist und mindestens eine der beiden übrigen Teilspeicher, mit einem eingangsseitigen Datenbus (6) verbunden ist.

7. Anordnung nach Anspruch (6), **dadurch gekennzeichnet,** daß die drei Teilspeicher (8, 9, 10) als Fifo-Speicher verschaltet sind.

8. Anordnung nach einem der Ansprüch 5. bis 7., **dadurch gekennzeichnet,** daß die Speicherkapazität des ausgangsseitigen Teilspeichers (10) doppelt so groß ist wie jeweils die Kapazitäten der anderen Teilspeicher (8, 9).

# FIG 1

CLK 1

CLK 2

24,25

5

1

7

6

3

5

1

6

7

24,25

21,22

2

23,26

4

5

1

6

7

24,25

# FIG 3

A

B

C

IP

IB

A

B1

B2

B3

C1

C2

A

# FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | IBM TECHNICAL DISCLOSURE BULLETIN, Band 10, Nr. 8, Januar 1968, Seiten 1310-1312, New York, US; A. CROISIER et al.: "PCM terminal buffer" * Seite 1311, Zeile 25 - Seite 1312, Zeile 11; Figur 2 * | 1 | G 06 F 5/06 |
| A | IBM TECHNICAL DISCLOSURE BULLETIN, Band 16, Nr. 11, April 1974, Seiten 3618-3620, New York, US; A. POULET: "Interface between two transmission lines having different transmission speeds" * Seite 3619, Zeile 19 - Seite 3620, Zeile 14; Figur * | 1 | |
| A | US-A-4 056 851 (HOVAGIMYAN) * Spalte 1, Zeilen 18-62 * | 1 | RECHERCHIERTE SACHGEBIETE (Int. Cl.4) G 06 F H 04 L |
| A | PATENTS ABSTRACTS OF JAPAN, Band 6, Nr. 37, 24. Juli 1982, Seite 47 P 130; & JP - A - 57 59 243 (TOKYO SHIBAURA DENKI K.K.) 09-04-1982 | 1 | |
| A | US-A-4 044 335 (SPENCE) * Spalte 2, Zeile 18 - Spalte 3, Zeile 64; Figur 1 * | 1 | |

--- -/-

Der vorliegende Recherchenbericht wurde für alle Patentansprüche erstellt.

| Recherchenort DEN HAAG | Abschlußdatum der Recherche 17-06-1986 | Prüfer WANZEELE R.J. |
|---|---|---|

Europäisches
Patentamt

**EUROPÄISCHER RECHERCHENBERICHT**

Nummer der Anmeldung

EP 86 10 3566

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | ELECTRONIC COMPONENTS & APPLICATIONS, Band 4, Nr. 4, August 1982, Seiten 233-240, Eindhoven, NL; J. SELTZER: "Controller IC for FIFO buffers" * Insgesamt * | 1 | |

RECHERCHIERTE
SACHGEBIETE (Int. Cl.4)

Der vorliegende Recherchenbericht wurde für alle Patentansprüche erstellt.

| Recherchenort DEN HAAG | Abschlußdatum der Recherche 17-06-1986 | Prüfer WANZEELE R.J. |
|---|---|---|